# EUROPEAN PATENT APPLICATION

(11) **EP 4 645 400 A1**
(43) Date of publication of application: **05.11.2025**
(21) Application number: 24189556.4
(22) Date of filing: 18.07.2024
(51) Int. Cl.: H01M 4/04, H01M 4/134, H01M 4/1395, H01M 4/36, H01M 4/38, H01M 4/587, H01M 4/62

(54) **COMPOSITE ANODE MATERIAL AND PREPARATION METHOD THEREOF**

(30) Priority: 29.04.2024 TW 113115923
(71) Applicant: Advanced Lithium Electrochemistry Co., Ltd., Taoyuan City 330 (TW)
(72) Inventor: CHANG, Shu-Jui, 330 Taoyuan City (TW); WU, Nae-Lih, 330 Taoyuan City (TW); HSIEH, Han-Wei, 330 Taoyuan City (TW)
(74) Representative: 2K Patentanwälte Blasberg Kewitz & Reichel

(57) **Abstract**

A composite anode material (1) is provided. The composite anode material (1) includes a graphite (10), a plurality of silicon particles (20), and a carbon coating layer (30). The graphite (10) is pretreated with surface modification through an organic polymer. The plurality of silicon particles (20) are coated on the graphite (10). The carbon coating layer (30) is coated on the graphite (10) and the plurality of silicon particles (20). The carbon coating layer (30) is formed by carbonizing the organic polymer through a heat treatment. A preparation method of the composite anode material (1) includes steps as follows. Firstly, a graphite (10) and an organic polymer are mixed to form a first composite particle. Secondly, the first composite particle and a plurality of silicon particles (20) are mixed to form a second composite particle. Finally, a heat treatment is performed on the second composite particle to form the composite anode material (1).

## Description

### FIELD OF THE INVENTION

The present disclosure relates to a composite anode material and a preparation method thereof, and more particularly to a silicon-carbon composite anode material and a preparation method thereof, which achieves uniform distribution of silicon particles through surface modification of a graphite with an organic polymer.

### BACKGROUND OF THE INVENTION

Nowadays, with the rapid technology development, reusable secondary batteries are widely used in fields such as electric vehicles and energy storage. To achieve superior efficiency and convenience, the demand for high-performance secondary batteries is growing day by day. Notably, the performance of secondary batteries is closely related to the anode material used, with graphite being one of the mainstream choices.

Since the graphite anode material currently used has nearly reached its specific capacity limit, mixing a graphite and silicon particles, which have higher specific capacity, to form a silicon-carbon composite anode material is a method to improve the specific capacity of the anode material. However, both the surface potential of the graphite and the silicon particles are negative. When the graphite and the silicon particles are mixed to form a silicon-carbon composite anode material, uniform distribution of the silicon particles on the graphite surface cannot be achieved due to the similar surface potential of the graphite and the silicon particles, resulting in the silicon-carbon composite anode material having lower performance.

Therefore, there is a need to provide a silicon-carbon composite anode material and a preparation method thereof that achieves uniform distribution of silicon particles to address the issues.

### SUMMARY OF THE INVENTION

An object of the present disclosure is to provide a silicon-carbon composite anode material and a preparation method thereof, which achieves uniform distribution of silicon particles through surface modification of a graphite with an organic polymer. The preparation method of the composite anode material includes the steps as follows. Firstly, the graphite and an organic polymer are liquid-mixed, so that the graphite is surface-modified with the organic polymer to form a first composite particle. After that, the first composite particle and silicon particles are liquid-mixed to form a second composite particle. With the surface modification on the graphite with the organic polymer, such as polydiallyldimethylammonium chloride (PDDA) or polyvinyl alcohol (PVA), positive surface potential is formed on the first composite particle. Therefore, the silicon particles having negative surface potential are attracted to the graphite, resulting in a uniform distribution of the silicon particles on the graphite and eliminating the need for a binder. Furthermore, the graphite and the organic polymer are mixed with a crosslinker, such as glutaraldehyde (GA), so that the bonding between the graphite surface and the organic polymer are strengthened through a cross-linking between the crosslinker and the organic polymer, resulting in a superior surface modification. Finally, the second composite particle is heat-treated to form the composite anode material. The composited anode material includes the graphite, the silicon particles, and a carbon coating layer. The silicon particles are coated on the graphite, and the carbon coating layer is coated on the graphite and the silicon particles. The carbon coating layer is formed by carbonizing the organic polymer, which is used for surface modification on the graphite surface, through the heat treatment. Namely, the addition of the organic polymer not only achieves the uniform distribution of the silicon particles, but also forms the carbon coating layer, resulting in superior electrochemical performance of the composite anode material.

In accordance with an aspect of the present disclosure, a composite anode material is provided. The composite anode material includes a graphite, a plurality of silicon particles, and a carbon coating layer. The graphite is pretreated with a surface modification through an organic polymer. The plurality of silicon particles are coated on the graphite. The carbon coating layer is coated on the graphite and the plurality of silicon particles, and the carbon coating layer is formed by carbonizing the organic polymer through a heat treatment.

In an embodiment, the organic polymer includes a polydiallyldimethylammonium chloride (PDDA) and a polyvinyl alcohol (PVA).

In an embodiment, the carbon coating layer is formed by carbonizing the organic polymer and a crosslinker through the heat treatment.

In an embodiment, the crosslinker includes a glutaraldehyde (GA).

In an embodiment, the graphite has an average particle size ranged from 5 µm to 50 µm.

In an embodiment, the plurality of silicon particles have an average particle size ranged from 100 nm to 200 nm.

In an embodiment, the heat treatment is performed at a temperature ranged from 900°C to 1100°C.

In an embodiment, the heat treatment is performed in a nonoxidizing atmosphere.

In accordance with an aspect of the present disclosure, a preparation method of a composite anode material is provided. The preparation method including steps of : (a) preparing a graphite; (b) mixing the graphite and an organic polymer, so that the organic polymer is coated on the graphite to form a first composite particle; (c) mixing the first composite particle and a plurality of silicon particles, so that the plurality of silicon particles are coated on the first composite particle to form a second composite particle; and (d) performing a heat treatment on the second composite particle, so that the organic polymer is carbonized to form the composite anode material. The composite anode material includes the graphite, the plurality of silicon particles, and a carbon coating layer, wherein the plurality of silicon particles are coated on the graphite, the carbon coating layer is coated on the graphite and the plurality of silicon particles, and the carbon coating layer is formed by carbonizing the organic polymer through the heat treatment.

In an embodiment, a weight of the organic polymer is 5% to 10% of a weight of the graphite.

In an embodiment, the organic polymer includes a polydiallyldimethylammonium chloride (PDDA) and a polyvinyl alcohol (PVA).

In an embodiment, a weight of the PDDA is 5% to 10% of a weight of the graphite, and a weight of the PVA is 0.5% to 1.5% of the weight of the graphite.

In an embodiment, the graphite and the organic polymer are mixed with a crosslinker to form the first composite particle, and the carbon coating layer is formed by carbonizing the organic polymer and the crosslinker through the heat treatment.

In an embodiment, a weight of the crosslinker is 0.5% to 1.5% of a weight of the graphite.

In an embodiment, the crosslinker includes a glutaraldehyde (GA).

In an embodiment, the graphite has an average particle size ranged from 5 µm to 50 µm.

In an embodiment, the plurality of silicon particles have an average particle size ranged from 100 nm to 200 nm.

In an embodiment, the heat treatment is performed at a temperature ranged from 900°C to 1100°C.

In an embodiment, the heat treatment is performed in a nonoxidizing atmosphere.

### BRIEF DESCRIPTION OF THE DRAWINGS

FIG 1 is a schematic view of a composite anode material according to an embodiment of the present disclosure;
FIGS. 2A to 2D are SEM images of a composite anode material according to an embodiment of the present disclosure;
FIG 3 is a flow chart of a preparation method of a composite anode material according to an embodiment of the present disclosure;
FIG 4A is a SEM image of a second composite particle according to an embodiment of the present disclosure;
FIG 4B is SEM image of a silicon-carbon composite particle without surface modification;
FIG 5A is a SEM-EDS image of a second composite particle according to an embodiment of the present disclosure;
FIG 5B is a SEM-EDS image of a silicon-carbon composite particle without surface modification;
FIG 6A illustrates a charging-discharging curve at a C-rate of 0.1 C according to a fourth demonstrative example of the present disclosure;
FIG 6B illustrates a charging-discharging curve at a C-rate of 0.1 C according to a second comparative example;
FIG 7A is a SEM image according to the fourth demonstrative example of the present disclosure;
FIG 7B is a SEM image according to the second comparative example;
FIGS. 8A and 8B are XPS spectrums according to the fourth example of the present disclosure and the second comparative example;
FIG 9 illustrates conductivity curves according to the fourth example of the present disclosure and the second comparative example;
FIG 10A illustrates a charging-discharging curve at a C-rate of 0.3 C according to a fourth demonstrative example of the present disclosure;
FIG 10B illustrates a charging-discharging curve at a C-rate of 0.3 C according to a second comparative example;
FIG 11A illustrates a coulombic efficiency curve at a C-rate of 0.3 C according to a fourth demonstrative example of the present disclosure;
FIG 11B illustrates a coulombic efficiency curve at a C-rate of 0.3 C according to a second comparative example; and
FIG 12 illustrates charging-discharging curves at different C-rates according to the fourth example of the present disclosure and the second comparative example.

### DETAILED DESCRIPTION OF THE PREFERRED EMBODIMENT

The present disclosure will now be described in greater detail with reference to the following embodiments. Please note that these descriptions of preferred embodiments are provided for the purpose of illustration and clarification only. They are not intended to be exhaustive or restricted to the precise forms presented. For example, the description of a first feature formed over or on a second feature in the following text may include embodiments in which the first and second features are in direct contact. It may also include embodiments in which additional features are formed between the first and second features, resulting in that the first and second features may not be in direct contact. Although the wide numerical ranges and parameters of the present disclosure are approximations, numerical values are set forth in the specific examples as precisely as possible. The terms such as "and," "or," and similar conjunctions used herein encompass any or all combinations of one or more of the associated listed items. Alternatively, the term "about" denotes a range within an acceptable standard error of the average recognized by one having ordinary skill in the art. In addition to the operational or working examples, unless otherwise explicitly stated, all numerical ranges, quantities, values, and percentages, including but not limited to those associated with materials, time duration, temperature, operating conditions, quantity ratios, and the like, should be considered approximate and prefaced with the term "about." In addition to the operational or working examples, unless otherwise explicitly stated, all numerical ranges, quantities, values, and percentages, including but not limited to those associated with materials, time duration, temperature, operating conditions, quantity ratios, and the like, should be considered approximate and prefaced with the term "about." A range may be expressed as spanning from one endpoint to another, or both endpoints may be included. Unless stated otherwise, all ranges disclosed herein are inclusive.

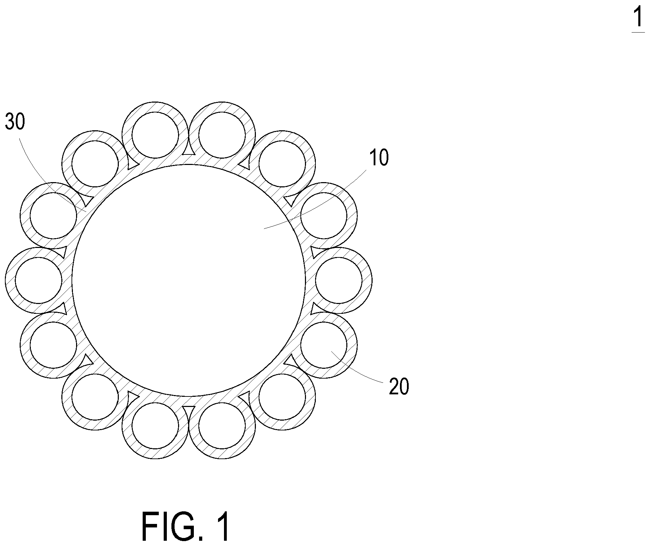

Please refer to FIG 1. FIG 1 is a schematic view of a composite anode material according to an embodiment of the present disclosure. In the embodiment, the composite anode material 1 includes a graphite 10, a plurality of silicon particles 20, and a carbon coating layer 30. The graphite 10 is pretreated with a surface modification through an organic polymer. The plurality of silicon particles 20 are coated on the graphite 10. The carbon coating layer 30 is coated on the graphite 10 and the plurality of silicon particles 20. In the embodiment, the carbon coating 30 is formed by carbonizing the organic polymer through a heat treatment. Preferably but not exclusively, the organic polymer includes a polydiallyldimethylammonium chloride (PDDA) and a polyvinyl alcohol (PVA). Preferably but not exclusively, the carbon coating layer 30 is formed by carbonizing the organic polymer and a crosslinker through the heat treatment, and the crosslinker includes a glutaraldehyde (GA). Certainly, other organic polymers and crosslinkers are also suitable for forming the carbon coating layer 30 of the present disclosure through the heat treatment. In the embodiment, the graphite 10 has an average particle size (D50) ranged from 5 µm to 50 µm, and the plurality of silicon particles 20 have an average particle size (D50) ranged from 100 nm to 200 nm. The heat treatment is performed at a temperature ranged from 900°C to 1100°C, and is performed in a nonoxidizing atmosphere. The organic polymer and the crosslinker are carbonized through the high-temperature heat treatment to form the carbon coating layer 30, resulting in the superior electrochemical performance of the composite anode material. Preferably but not exclusively, the nonoxidizing atmosphere is selected from a group consisting of helium, neon, argon, nitrogen, and hydrogen.

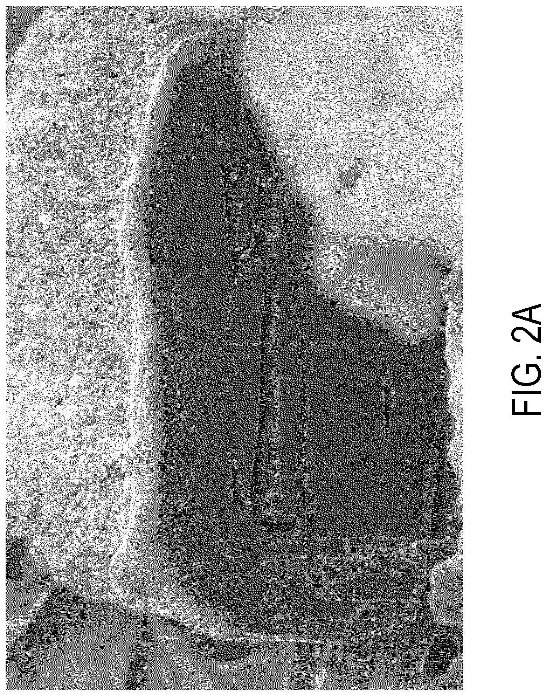

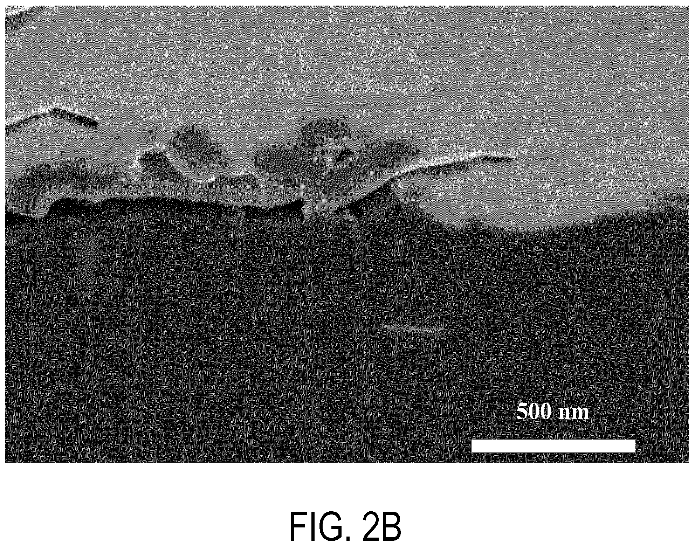

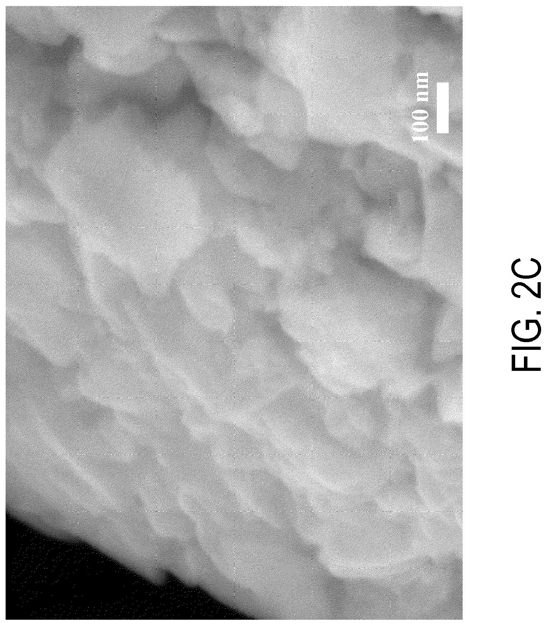

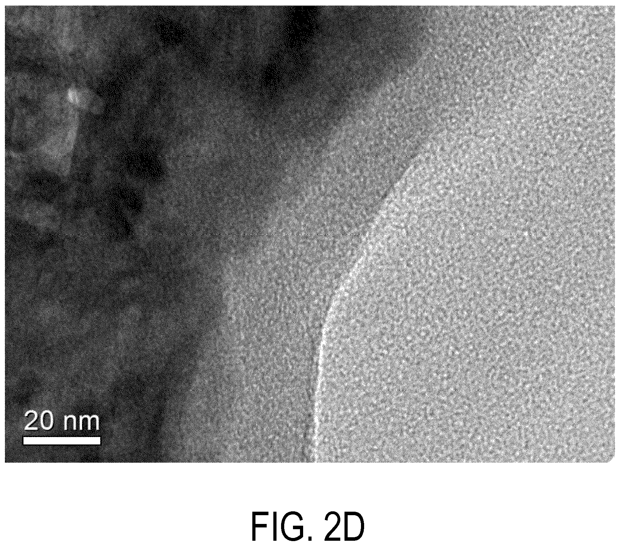

Please refer to FIGS. 2A to 2D. FIGS. 2A to 2D are SEM images of a composite anode material according to an embodiment of the present disclosure. In the embodiment, FIGS. 2A to 2D are obtained through a focused ion beam scanning electron microscopy (FIB-SEM). FIG 2A shows the graphite 10, and the plurality of the silicon particles 20 coated on the graphite 10 of the composite anode material 1. FIG 2B is an enlarged view of FIG 2A. FIG 2B shows the carbon coating layer 30, which is formed by the plurality of carbon particles, between the graphite 10 and the silicon particles 20. FIG 2C shows a coating structure including the plurality of silicon particles 20. FIG 2D shows the silicon particles 20, and the carbon coating layer 30 coated on the silicon particles 20.

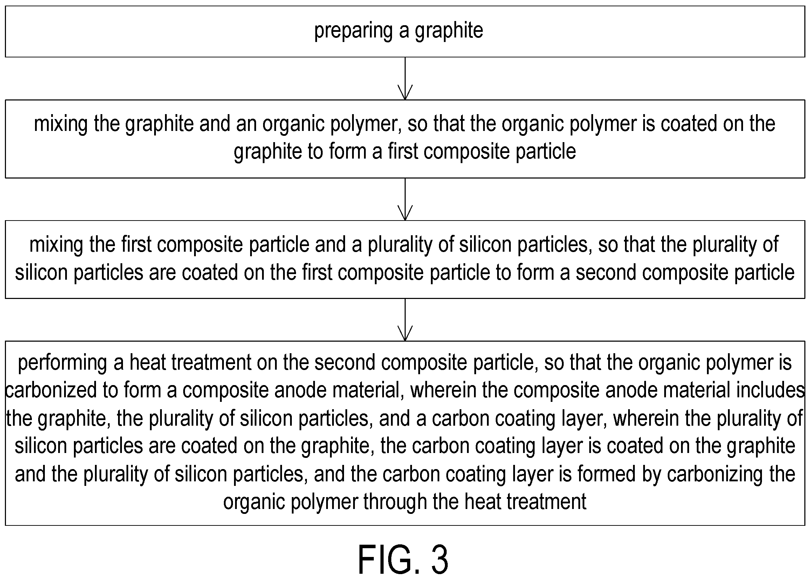

Please refer to FIG 3. FIG 3 is a flow chart of a preparation method of a composite anode material according to an embodiment of the present disclosure. In the embodiment, the preparation method of the composite anode material including steps as follows. Firstly, as shown in step S1 and S2, a graphite is provided, and the graphite and an organic polymer are mixed, so that the organic polymer is coated on the surface of the graphite to form the first composite particle. Preferably but not exclusively, the graphite 10 has an average particle size (D50) ranged from 5 µm to 50 µm, and the average particle size (D50) is obtained through a laser particle size analyzer (LPSA). The organic polymer includes a polydiallyldimethylammonium chloride (PDDA) and a polyvinyl alcohol (PVA). Preferably but not exclusively, a weight of the organic polymer is 5% to 10% of a weight of the graphite 10, a weight of the PDDA is 5% to 10% of the weight of the graphite 10, and a weight of the PVA is 0.5% to 1.5% of the weight of the graphite 10. In the embodiment, the organic polymer is provided in an organic polymer solution with water as the solvent. The graphite 10 is added to the organic polymer solution and then mixed and dried to form the first composite particle.

In the embodiment, the graphite 10 and the organic polymer are mixed with a crosslinker to form the first composite particle. Preferably but not exclusively, the crosslinker includes a glutaraldehyde (GA), and a weight of the crosslinker is 0.5% to 1.5% of the weight of the graphite 10. The graphite 10, the crosslinker, and the organic polymer are mixed together to strengthen the bonding between the organic polymer and the graphite surface through the cross-linking between the crosslinker and the organic polymer, and it results in a superior surface modification. The graphite 10 and the organic polymer are liquid-mixed and then dried through spray drying, so that the graphite is coated by the organic polymer to achieve the surface modification, thereby forming positive surface potential on the first composite particle. Preferably but not exclusively, the spray drying is performed at a temperature ranged from 100°C to 180°C. In the embodiment, a heat treatment between 80°C to 120°C is performed on the first composite particle formed through the spray drying. The heat treatment performed after the spray drying promotes the cross-linking between the organic polymer and the crosslinker, and it prevents the organic polymer from dissolving in solvents again later.

After that, as shown in step S3, the first composite particle and a plurality of silicon particles 20 are mixed, so that the silicon particles 20 are coated on the surface of the first composite particle to form a second composite particle. Since the surface potential of the first composite particle is positive, the silicon particles 20 having negative surface potential are attracted and distributed uniformly on the surface of the first composite particle, eliminating the need for a binder. Preferably but not exclusively, the plurality of silicon particles 20 is provided in a solution with alcohol as the solvent. The first composite particle is added into the silicon particle solution, mixed, and then filtered and dried to form the second composite particle. The plurality of silicon particles 20, which is nanoparticles, has an average particle size ranged from 100 nm to 200 nm. The average particle size (D50) is obtained through a laser particle size analyzer (LPSA). Certainly, the average particle size of the silicon particles is adjustable according to actual needs. In other embodiments, the average particle size of the silicon particles is ranged from 10 nm to 100 nm, and the present disclosure is not limited thereto. Preferably but not exclusively, a weight of the plurality of silicon particles 20 is 0.5% to 7% of the first composite particle, and more preferably 5% to 7%, to obtain a composite anode material with superior electrochemical performance.

Finally, as shown in step S4, a heat treatment is performed on the second composite particle, so that the organic polymer is carbonized to form the composite anode material 1. The composite anode material 1 includes the graphite 10, the plurality of silicon particles 20, and a carbon coating layer 30. The plurality of silicon particles 20 are coated on the graphite 10. The carbon coating layer 30 is coated on the graphite 10 and the plurality of silicon particles 20, and the carbon coating layer 30 is formed by carbonizing the organic polymer, or the combination of the organic polymer and the crosslinker, through the heat treatment. Preferably but not exclusively, the heat treatment is performed at a temperature ranged from 900°C to 1100°C, and is performed in a nonoxidizing atmosphere. The organic polymer and the crosslinker are carbonized through the high-temperature heat treatment to form the carbon coating layer 30, resulting in the superior electrochemical performance of the composite anode material. The nonoxidizing atmosphere is selected from a group consisting of helium, neon, argon, nitrogen, and hydrogen.

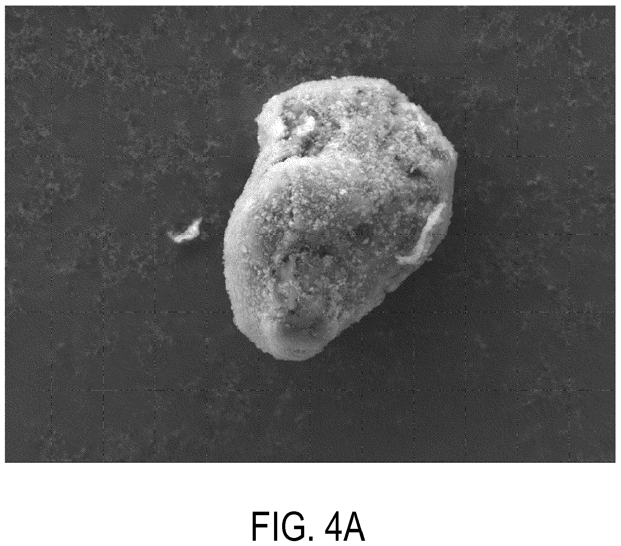

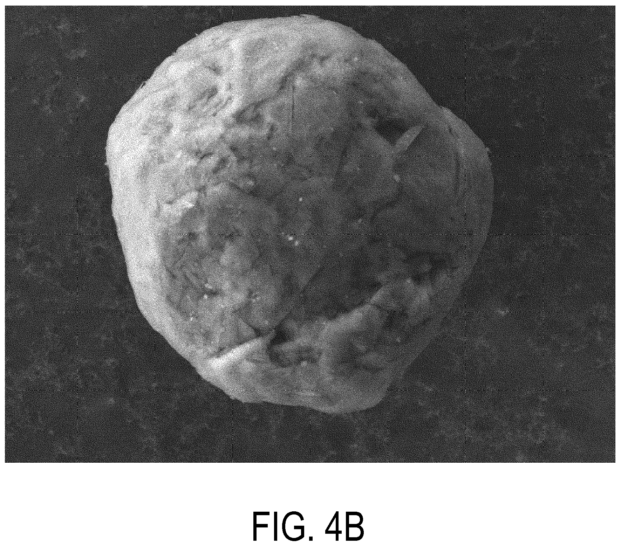

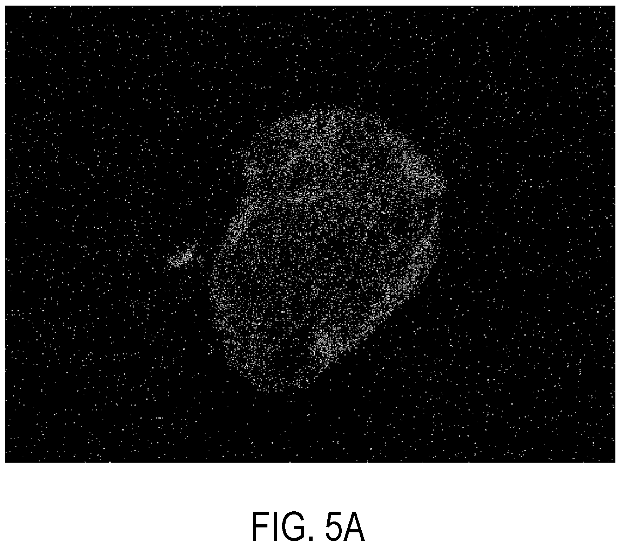

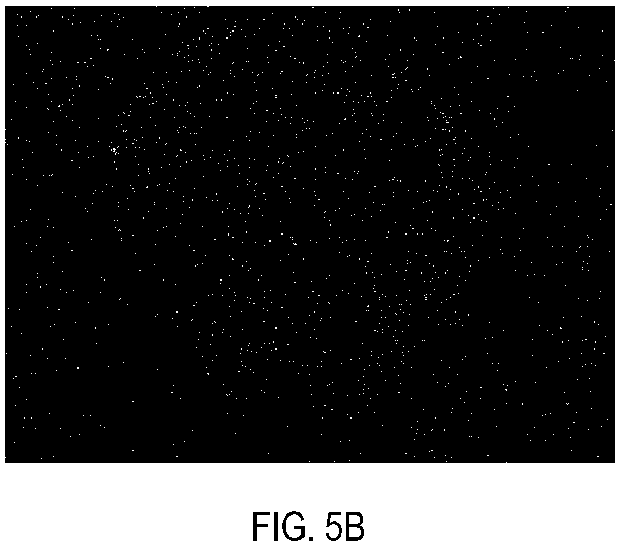

Please refer to FIGS. 4A to 5B. FIG 4A is a SEM image of a second composite particle according to an embodiment of the present disclosure. FIG 4B is SEM image of a silicon-carbon composite particle without surface modification. FIG 5A is a SEM-EDS image of a second composite particle according to an embodiment of the present disclosure. FIG 5B is a SEM-EDS image of a silicon-carbon composite particle without surface modification. FIGS. 4A to 5B are obtained through a scanning electron microscope (SEM). FIGS. 5A and 5B are the surface elemental analysis of silicon through energy dispersive spectrometer (EDS). As shown in FIGS. 5A and 5B, silicon is clearly observed on the second composite particle formed by the graphite with surface modification and the silicon particles. However, silicon is not clearly observed on the second composite particle formed by the graphite without surface modification. This indicates that surface modification of the graphite with the organic polymer achieves uniform distribution of the silicon particles.

The preparation methods of the present disclosure are elaborated below through comparative examples and demonstrative examples.

### First demonstrative example

3.43 g of polydiallyldimethylammonium chloride (PDDA) solution, 0.227 g of polyvinyl alcohol (PVA), and 0.4 g of glutaraldehyde (GA) solution are added into 100 ml of deionized water, and then mixed to form a first solution. After that, 20 g of graphite is added into the first solution, and then mixed to form a second solution. The PDDA solution has a weight percent concentration of 35 wt%, with deionized water as the solvent, and has a weight average molecular weight less than 100000. The PVA has a degree of hydrolysis of 88% and a weight average molecular weight of 88000. The GA solution has a weight percent concentration of 50 wt%, with deionized water as the solvent. Namely, the actual addition of PDDA is 1.2 g (6% of the weight of the graphite), PVA is 0.2 g (1% of the weight of the graphite), and GA is 0.2 g (1% of the weight of the graphite). The graphite has an average particle size of 13 µm.

A spray granulation to the second solution is performed to form a first composite particle. After that, a heat treatment is performed on the first composite particle for 2 hours at 100°C in a vacuum. The heat treatment promotes the cross-linking between the organic polymer and the crosslinker, and it prevents the organic polymer from dissolving in solvents again later.

5 g of first composite particle is added into 0.5 g of silicon particle solution, and then mix to form a mixture solution, so that the silicon particles having negative surface potential are attached to the the first composite particle having positive surface potential. The silicon particle solution has a weight percent concentration of 10 wt%, with alcohol as the solvent. Namely, the actual addition of the silicon particles is 0.05g (1% of the first composite particle). The silicon particles have an average particle size of 150 nm. After that, filter the mixture solution to obtain a mixture. Subsequently, perform a heat treatment to dry the mixture for 2 hours at 100°C in a vacuum to form a second composite particle.

The second composite particle is placed into an aluminum oxide crucible and a heat treatment is performed on the second composite particle in a nonoxidizing atmosphere. The temperature of the heat treatment is started at room temperature (25°C), ramped up to 1000°C at a rate of 2°C per minute, and maintained at 1000°C for 3 hours. The nonoxidizing atmosphere includes argon and 3% of hydrogen.

### Second demonstrative example

The preparation method of the second demonstrative example is generally similar to that of the first demonstrative example. However, in the second demonstrative example, the mixture solution is formed by mixing 5 g of first composite particle and 1.5 g of silicon particle solution. Namely, the actual addition of the silicon particles is 0.15g (3% of the first composite particle).

### Third demonstrative example

The preparation method of the third demonstrative example is generally similar to that of the first demonstrative example. However, in the third demonstrative example, the mixture solution is formed by mixing 5 g of first composite particle and 2.5 g of silicon particle solution. Namely, the actual addition of the silicon particles is 0.25g (5% of the first composite particle).

### Fourth demonstrative example

The preparation method of the fourth demonstrative example is generally similar to that of the first demonstrative example. However, in the fourth demonstrative example, the mixture solution is formed by mixing 5 g of first composite particle and 3.5 g of silicon particle solution. Namely, the actual addition of the silicon particles is 0.35g (7% of the first composite particle).

### First comparative example

The first comparative example is graphite.

### Second comparative example

The preparation method of the second comparative example is generally similar to that of the fourth demonstrative example. However, in the second comparative example, the final heat treatment to the second composite particle is omitted, and an electrode is prepared directly using the second composite particle without high-temperature heat treatment.

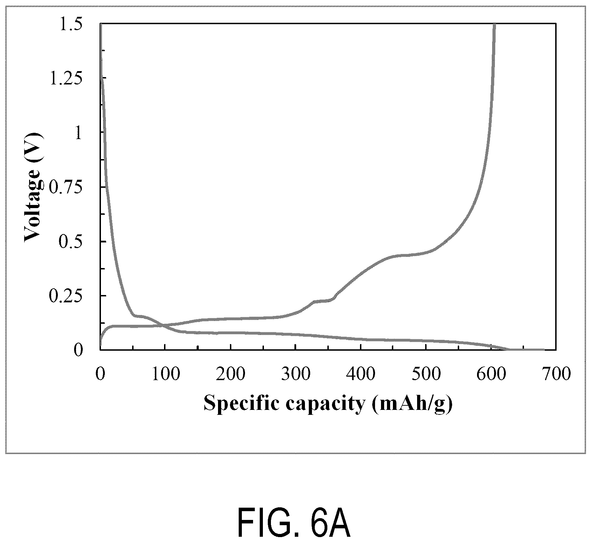

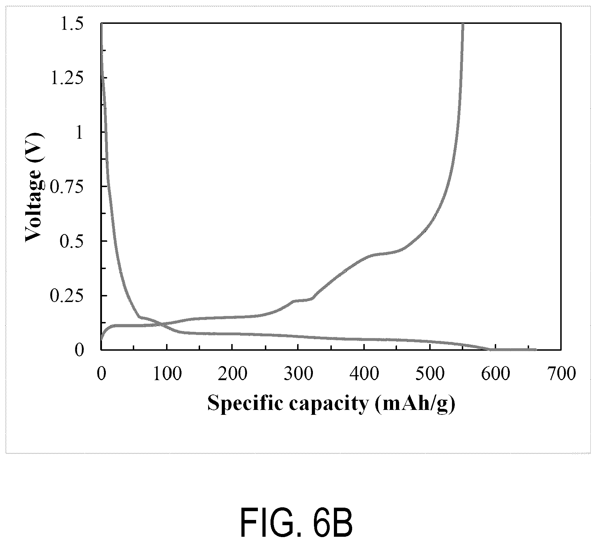

Please refer to FIGS. 6A to 6B and Table 1 below. FIGS. 6A and 6B illustrate charging-discharging curves at a C-rate of 0.1 C according to the fourth demonstrative example of the present disclosure and the second comparative example. FIG 6A illustrates the charging-discharging curves of the first cycle for the fourth demonstrative example of the present disclosure. FIG 6B illustrates the charging-discharging curves of the first cycle for the second comparative example. Table 1 shows the charging-discharging test results of the first to fourth demonstrative example of the present disclosure and the first and second comparative example. The charging-discharging tests are performed on button cells, and each of the button cells includes an electrode, a lithium metal, an electrolyte, and a separator film. The electrodes of the button cells are prepared using the demonstrative examples and the comparative examples, respectively. The button cell cases are CR2032. The electrode includes 90 wt% active material (demonstrative example or comparative example), 4 wt% Super P, and 6 wt% sodium alginate. The electrolyte includes 1 M lithium hexafluorophosphate (LiPF₆) dissolved in a 1:2 volume ratio of ethylene carbonate (EC) and ethyl methyl carbonate (EMC), with 2 wt% vinylene carbonate (VC) and 10 wt% fluorinated ethylene carbonate (FEC). The separator film is a polyethylene film. The charging-discharging tests have a voltage window ranged from 1 mV to 1.5 V. The button cells are discharged at a C-rate of 0.1 C using a constant current (CC) method to 1 mV, and then discharged using a constant voltage (CV) method until the current is 0.1 times that of the constant current (CC) method. The button cells are charged at a C-rate of 0.1 C using a constant current (CC) method to 1.5 V.

**Table 1**

| | 1^{st} cycle | | | 2^{nd} cycle | | |
|---|---|---|---|---|---|---|
| | Specific discharge capacity (mAh/g) | Specific charge capacity (mAh/g) | Coulombic efficiency (%) | Specific discharge capacity (mAh/g) | Specific charge capacity (mAh/g) | Coulombic efficiency (%) |
| First demonstrative example | 412.37 | 460.74 | 89.50 | 413.08 | 420.33 | 98.27 |
| Second demonstrative example | 469.29 | 527.45 | 88.97 | 467.39 | 476.80 | 98.03 |
| Third demonstrative example | 546.44 | 617.60 | 88.48 | 547.96 | 562.22 | 97.46 |
| Fourth demonstrative example | 605.20 | 680.44 | 88.95 | 601.99 | 613.53 | 98.12 |
| First comparative example | 369.50 | 412.25 | 89.63 | 369.23 | 373.60 | 98.83 |
| Second comparative example | 550.37 | 660.83 | 83.28 | 540.84 | 591.34 | 91.46 |

As shown in Table 1, in the two charging-discharging cycles, the first to fourth demonstrative examples show superior specific capacities than the first comparative example, which is the graphite. The specific capacities, in descending order, are as follows: the fourth demonstrative example, where the weight of the silicon particles is 7% of the weight of the first composite particle; the third demonstrative example, where the weight of the silicon particles is 5% of the weight of the first composite particle; the second demonstrative example, where the weight of the silicon particles is 3% of the weight of the first composite particle; and the first demonstrative example, where the weight of the silicon particles is 1% of the weight of the first composite particle. This indicates that the composite anode material of the present disclosure, where the weight of the silicon particles is 0.5% to 7% of the first composite particle, has superior electrochemical performance. Preferably, the composite anode material of the present disclosure, where the weight of the silicon particles is 5% to 7% of the first composite particle, has even greater electrochemical performance.

Please refer to FIGS. 6A to 6B and Table 1, in the preparation methods of the fourth demonstrative example and the second comparative example, same ratio of the organic polymer and silicon particles are used. However, the specific capacities and the coulombic efficiency (CE) of the fourth demonstrative example is significantly better than those of the second comparative example. This indicates that the organic polymer is carbonized through high-temperature heat treatment to form the carbon coating layer coated on the graphite and the silicon particles, thereby improving the electrochemical performance of the composite anode material.

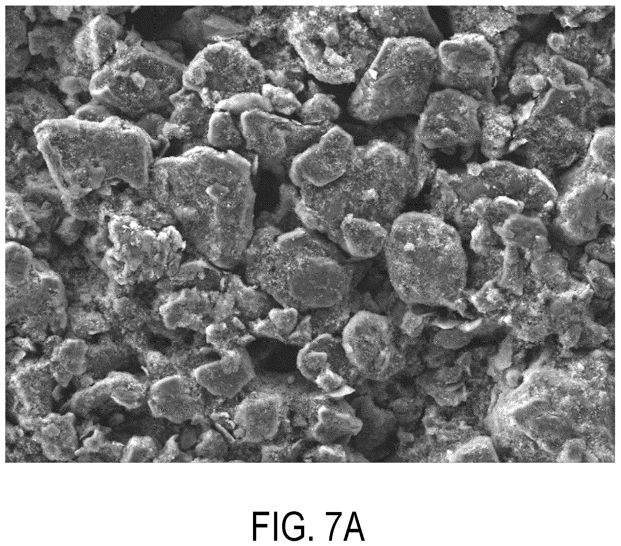

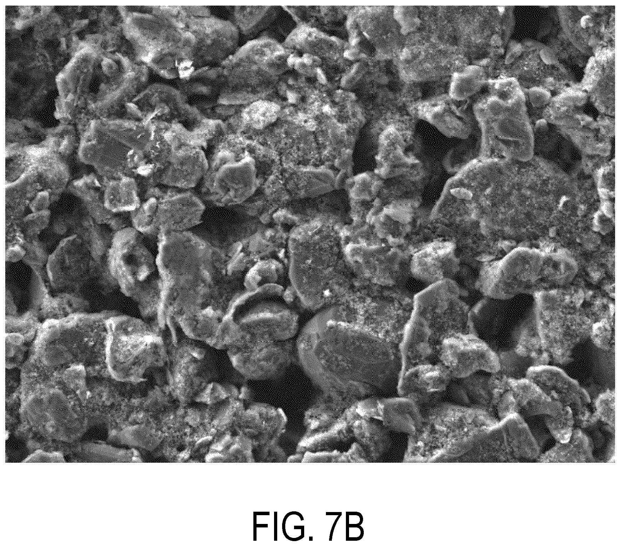

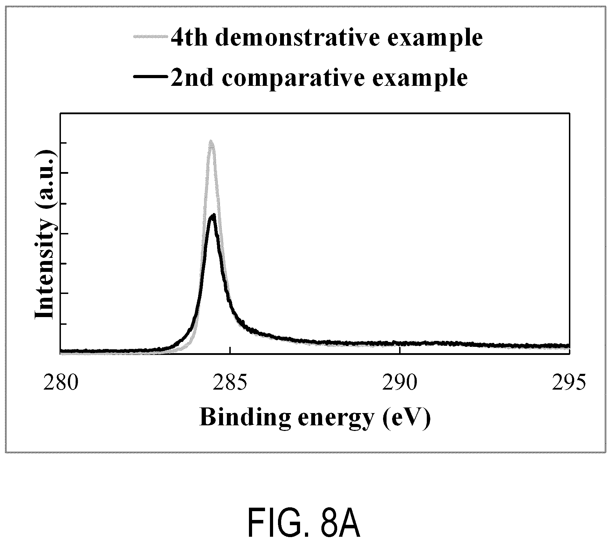

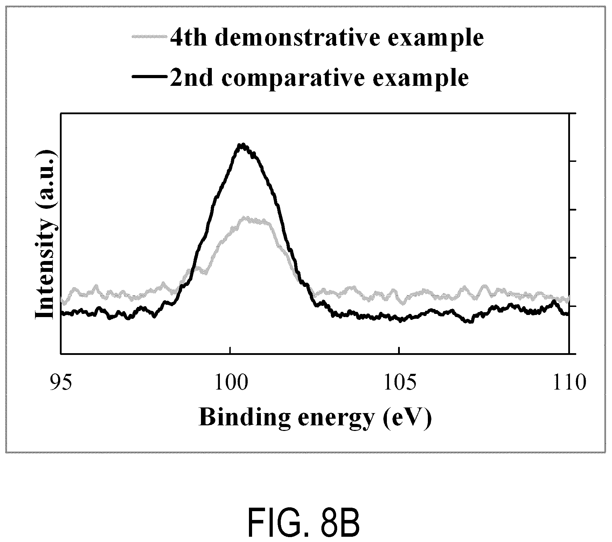

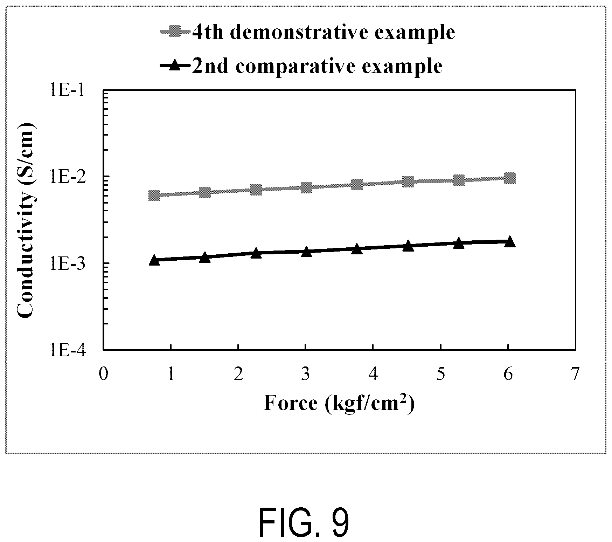

Please refer to FIGS. 7A to 9. FIGS. 7A and 7B are SEM images for the fourth demonstrative example of the present disclosure and the second comparative example, respectively. FIGS. 8A and 8B are XPS spectrums for the fourth example of the present disclosure and the second comparative example. The XPS spectrums are obtained through an X-ray photoelectron spectroscopy (XPS). FIG 9 illustrates conductivity curves for the fourth example of the present disclosure and the second comparative example. As shown in FIG 7A, in the fourth demonstrative example of the present disclosure, the organic polymer is carbonized through high-temperature heat treatment to form the carbon coating layer, therefore the silicon particles coated on the surface are less likely to fall off, forming a more compact structure. As shown in FIG 7B, in the second comparative example, the organic polymer is not carbonized through high-temperature heat treatment to form the carbon coating layer, therefore the silicon particles are more likely to fall off, forming a less compact structure. As shown is FIGS. 8A and 8B, at the binding energy of 284.8 eV, corresponding to the binding energy of C 1s, the peak value of the fourth demonstrative example is significantly greater than that of the second comparative example. At the binding energy of 102.64 eV, corresponding to the binding energy of Si 2p, the peak value of the fourth demonstrative example is significantly lower than that of the second comparative example. Namely, there are more carbon and less silicon on the surface of the fourth demonstrative example compared to the second comparative example. As shown in FIG 9, with the carbon coating layer, the conductivity of the fourth demonstrative example is 5 times greater than that of the second comparative example. This indicates that the organic polymer is carbonized through high-temperature heat treatment to form the carbon coating layer coated on the graphite and the silicon particles, thereby improving the electrochemical performance of the composite anode material of the present disclosure.

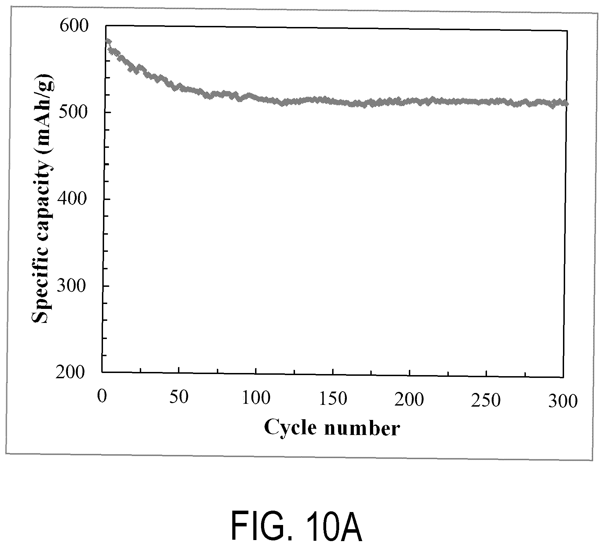

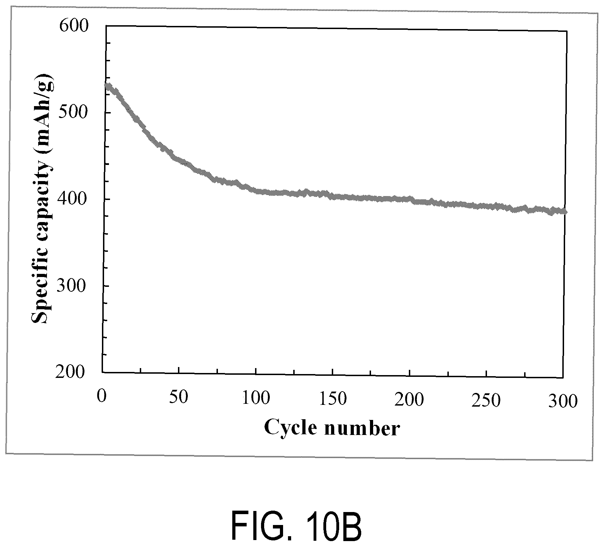

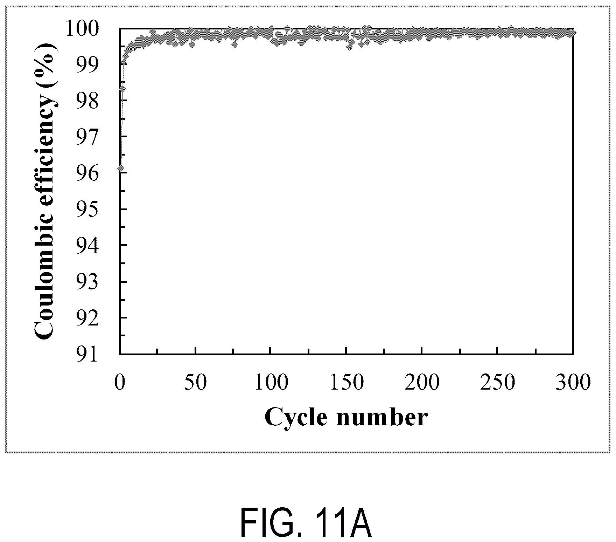

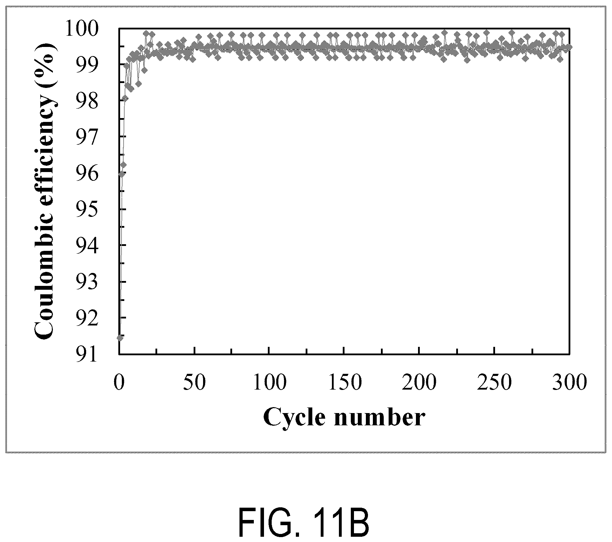

Please refer to FIGS. 10A to 11B and Table 2 below. FIG 10A illustrates a charging-discharging curve at a C-rate of 0.3 C for the fourth demonstrative example of the present disclosure. FIG 10B illustrates a charging-discharging curve at a C-rate of 0.3 C for the second comparative example. FIG 11A illustrates a coulombic efficiency curve at a C-rate of 0.3 C for the fourth demonstrative example of the present disclosure. FIG 11B illustrates a coulombic efficiency curve at a C-rate of 0.3 C for the second comparative example. Table 2 shows the charging-discharging test results of the fourth demonstrative example of the present disclosure and the second comparative example. The charging-discharging tests are performed on button cells which are made of the fourth demonstrative example and the second comparative example, as stated above. The charging-discharging tests have a voltage window ranged from 1 mV to 1.5 V. The button cells are discharged at a C-rate of 0.3 C using a constant current (CC) method to 1 mV, and then discharged using a constant voltage (CV) method until the current is 0.1 times that of the constant current (CC) method. The button cells are charged at a C-rate of 0.3 C using a constant current (CC) method to 1.5 V. As shown in FIGS. 10A and 10B and Table 2, the specific capacity and the capacity retention of the fourth demonstrative example is significantly better than those of the second comparative example. Additionally, as shown in FIGS. 11A and 11B, the coulombic efficiency of the fourth demonstrative example is also more stable than that of the second comparative example. This indicates that the organic polymer is carbonized through high-temperature heat treatment to form the carbon coating layer coated on the graphite and the silicon particles, thereby improving the electrochemical performance of the composite anode material of the present disclosure.

**Table 2**

| | Specific capacity at 1^{st} cycle (mAh/g) | Specific capacity at 300^{th} cycle (mAh/g) | Capacity retention (%) |
|---|---|---|---|
| fourth demonstrative example | 581.89 | 515.24 | 88.55 |
| second comparative example | 530.89 | 390.70 | 73.59 |

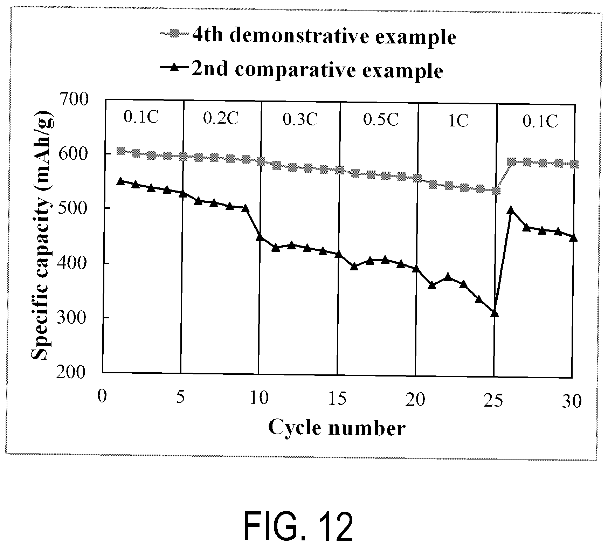

Please refer to FIG 12. FIG 12 illustrates charging-discharging curves in sequence at C-rates of 0.1 C, 0.2 C, 0.3 C, 0.5 C, 1C, and 0.1C, for the fourth example of the present disclosure and the second comparative example. The charging-discharging tests are performed for five cycles at each of the C-rates. The charging-discharging tests are performed on button cells which are made of the fourth demonstrative example and the second comparative example, as stated above. From the figures, it can be seen that the specific capacity and the capacity retention of the fourth demonstrative example at each C-rates is significantly better than those of the second comparative example, particularly at the C-rate of 1C.

In summary, the present disclosure provides a silicon-carbon composite anode material and a preparation method thereof, which achieves uniform distribution of silicon particles through surface modification of a graphite with an organic polymer. The preparation method of the composite anode material includes the steps as follows. Firstly, the graphite and an organic polymer are liquid-mixed, so that the graphite is surface-modified with the organic polymer to form a first composite particle. After that, the first composite particle and silicon particles are liquid-mixed to form a second composite particle. With the surface modification on the graphite with the organic polymer, such as polydiallyldimethylammonium chloride (PDDA) or polyvinyl alcohol (PVA), positive surface potential is formed on the first composite particle. Therefore, the silicon particles having negative surface potential are attracted to the graphite, resulting in a uniform distribution of the silicon particles on the graphite and eliminating the need for a binder. Furthermore, the graphite and the organic polymer are mixed with a crosslinker, such as glutaraldehyde (GA), so that the bonding between the graphite surface and the organic polymer are strengthened through a cross-linking between the crosslinker and the organic polymer, resulting in a superior surface modification. Finally, the second composite particle is heat treated to form the composite anode material. The composited anode material includes the graphite, the silicon particles, and a carbon coating layer. The silicon particles are coated on the graphite, and the carbon coating layer is coated on the graphite and the silicon particles. The carbon coating layer is formed by carbonizing the organic polymer, which is used for surface modification on the graphite surface, through the heat treatment. Namely, the addition of the organic polymer not only achieves the uniform distribution of the silicon particles, but also forms the carbon coating layer, resulting in superior electrochemical performance of the composite anode material

## Claims

1. A composite anode material (1), **characterized by** comprising:
a graphite (10), wherein the graphite (10) is pretreated with a surface modification through an organic polymer;
a plurality of silicon particles (20) coated on the graphite (10); and
a carbon coating layer (30) coated on the graphite (10) and the plurality of silicon particles (20), wherein the carbon coating layer (30) is formed by carbonizing the organic polymer through a heat treatment.

2. The composite anode material (1) according to claim 1, wherein the organic polymer comprises a polydiallyldimethylammonium chloride (PDDA) and a polyvinyl alcohol (PVA).

3. The composite anode material (1) according to claim 1 or 2, wherein the carbon coating layer (30) is formed by carbonizing the organic polymer and a crosslinker through the heat treatment.

4. The composite anode material (1) according to claim 3, wherein the crosslinker comprises a glutaraldehyde (GA).

5. The composite anode material (1) according to any of the preceding claims, wherein the graphite (10) has an average particle size ranged from 5 µm to 50 µm and the plurality of silicon particles (20) have an average particle size ranged from 100 nm to 200 nm.

6. The composite anode material (1) according to any of the preceding claims, wherein the heat treatment is performed at a temperature ranged from 900°C to 1100°C and in a nonoxidizing atmosphere.

7. A preparation method of a composite anode material (1), **characterized by** comprising the steps of :
(a) preparing a graphite (10);
(b) mixing the graphite (10) and an organic polymer, so that the organic polymer is coated on the graphite (10) to form a first composite particle;
(c) mixing the first composite particle and a plurality of silicon particles (20), so that the plurality of silicon particles (20) are coated on the first composite particle to form a second composite particle; and
(d) performing a heat treatment on the second composite particle, so that the organic polymer is carbonized to form the composite anode material (1), wherein the composite anode material (1) comprises the graphite (10), the plurality of silicon particles (20), and a carbon coating layer (30), wherein the plurality of silicon particles (20) are coated on the graphite (10), the carbon coating layer (30) is coated on the graphite (10) and the plurality of silicon particles (20), and the carbon coating layer (30) is formed by carbonizing the organic polymer through the heat treatment.

8. The preparation method according to claim 7, wherein a weight of the organic polymer is 5% to 10% of a weight of the graphite (10).

9. The preparation method according to claim 7 or 8, wherein the organic polymer comprises a polydiallyldimethylammonium chloride (PDDA) and a polyvinyl alcohol (PVA).

10. The preparation method according to claim 9, wherein a weight of the PDDA is 5% to 10% of a weight of the graphite (10), and a weight of the PVA is 0.5% to 1.5% of the weight of the graphite (10).

11. The preparation method according to any of claims 7 to 10, wherein the graphite (10) and the organic polymer are mixed with a crosslinker to form the first composite particle, and the carbon coating layer (30) is formed by carbonizing the organic polymer and the crosslinker through the heat treatment.

12. The preparation method according to claim 11, wherein a weight of the crosslinker is 0.5% to 1.5% of a weight of the graphite (10).

13. The preparation method according to claim 11 or 12, wherein the crosslinker comprises a glutaraldehyde (GA).

14. The preparation method according to any of claims 7 to 13, wherein the graphite (10) has an average particle size ranged from 5 µm to 50 µm and the plurality of silicon particles (20) have an average particle size ranged from 100 nm to 200 nm.

15. The preparation method according to any of claims 7 to 14, wherein the heat treatment is performed at a temperature ranged from 900°C to 1100°C and in a nonoxidizing atmosphere.

## Amended claims

### Amended claims in accordance with Rule 137(2) EPC.

1. A composite anode material (1), **characterized by** comprising:
a graphite (10), wherein the graphite (10) is pretreated with a surface modification through an organic polymer;
a plurality of silicon particles (20) coated on the graphite (10); and
a carbon coating layer (30) coated on the graphite (10) and the plurality of silicon particles (20), wherein the carbon coating layer (30) is formed by carbonizing the organic polymer through a heat treatment; **characterized in that**
the organic polymer comprises a polydiallyldimethylammonium chloride (PDDA) and a polyvinyl alcohol (PVA),
the carbon coating layer (30) is formed by carbonizing the organic polymer and a crosslinker through the heat treatment, and
the crosslinker comprises a glutaraldehyde (GA).

2. The composite anode material (1) according to any of the preceding claims, wherein the graphite (10) has an average particle size ranged from 5 µm to 50 µm, and the plurality of silicon particles (20) have an average particle size ranged from 100 nm to 200 nm.

3. The composite anode material (1) according to any of the preceding claims, wherein the heat treatment is performed at a temperature ranged from 900°C to 1100°C and in a nonoxidizing atmosphere.

4. A preparation method of a composite anode material (1), comprising the steps of :
(a) preparing a graphite (10);
(b) mixing the graphite (10) and an organic polymer, so that the organic polymer is coated on the graphite (10) to form a first composite particle, wherein the organic polymer comprises a polydiallyldimethylammonium chloride (PDDA) and a polyvinyl alcohol (PVA), wherein the graphite (10) and the organic polymer are mixed with a crosslinker to form the first composite particle, and the carbon coating layer (30) is formed by carbonizing the organic polymer and the crosslinker through the heat treatment, wherein the crosslinker comprises a glutaraldehyde (GA);
(c) mixing the first composite particle and a plurality of silicon particles (20), so that the plurality of silicon particles (20) are coated on the first composite particle to form a second composite particle; and
(d) performing a heat treatment on the second composite particle, so that the organic polymer is carbonized to form the composite anode material (1), wherein the composite anode material (1) comprises the graphite (10), the plurality of silicon particles (20), and a carbon coating layer (30), wherein the plurality of silicon particles (20) are coated on the graphite (10), the carbon coating layer (30) is coated on the graphite (10) and the plurality of silicon particles (20), and the carbon coating layer (30) is formed by carbonizing the organic polymer through the heat treatment.

5. The preparation method according to claim 4, wherein a weight of the organic polymer is 5% to 10% of a weight of the graphite (10).

6. The preparation method according to claim 5, wherein a weight of the PDDA is 5% to 10% of a weight of the graphite (10), and a weight of the PVA is 0.5% to 1.5% of the weight of the graphite (10).

7. The preparation method according to any of claims 4 to 6, wherein a weight of the crosslinker is 0.5% to 1.5% of a weight of the graphite (10).

8. The preparation method according to any of claims 4 to 7, wherein the graphite (10) has an average particle size ranged from 5 µm to 50 µm and the plurality of silicon particles (20) have an average particle size ranged from 100 nm to 200 nm.

9. The preparation method according to any of claims 4 to8, wherein the heat treatment is performed at a temperature ranged from 900°C to 1100°C and in a nonoxidizing atmosphere.
